# EUROPEAN PATENT SPECIFICATION

(11) **EP 1 364 579 B1**
(45) Date of publication and mention of the grant of the patent: **22.11.2006**
(21) Application number: 02710881.0
(22) Date of filing: 30.01.2002
(51) Int. Cl.: A01N 63/04, A01M 1/10

(54) **ENTOMOPATHOGENIC MICROORGANISM SPORES CARRIER AND METHOD FOR CONTROLLING HARMFUL INSECTS**
TRÄGER FÜR SPOREN ENTOMOPATHOGENER MIKROORGANISMEN, SOWIE VERFAHREN ZUR BEKÄMPFUNG VON SCHADINSEKTEN
VEHICULE PORTEUR DE SPORES D'UN MICROORGANISME ENTOMOPATHOGENE ET PROCEDE PERMETTANT DE LUTTER CONTRE LES INSECTES INCOMMODANTS

(30) Priority: 30.01.2001 ES 200100266
(43) Date of publication of application: 26.11.2003
(73) Proprietor: CONSEJO SUPERIOR DE INVESTIGACIONES CIENTIFICAS, E-28006 Madrid (ES); UNIVERSIDAD POLITECNICA DE VALENCIA, 46022 Valencia (ES)
(72) Inventor: PRIMO YUFERA, Eduardo, Inst. de Tecnologia Quimica, S/N, 46022 Valencia (ES); IBRAHIM FAHMY, Mohamed, Inst. de Tecnologia Quim., S/N, 46022 Valencia (ES); MUNOZ PALLARES, Juan, Inst. de Tecnologia Quimica, S/N, 46022 Valencia (ES); MOYA SANZ, Pilar, Instituto de Tecnologia Quimica, S/N, 46022 Valencia (ES)
(74) Representative: Ungria Lopez, Javier
(86) International application number: PCT/ES2002/000043
(87) International publication number: WO 2002/060260

(56) References cited:
- WO-A1-92/03055
- WO-A1-92/11856
- WO-A1-95/10597
- WO-A1-99/44420

## Description

### TECHNICAL FIELD OF THE INVENTION

The present invention is set within the agricultural sector, particularly in the field of process for combating insects. More specifically, it refers to a carrier vehicle of spores of at least one entomopathogenic microorganism adsorbed on a granular porous support or in powder form; to a device which includes said composition or said vehicle; to an incorporated attractant semiochemical component and to a method for combating insects by means of the use of said device.

### BACKGROUND OF THE INVENTION

The use of insecticides in controlling plagues of insects presents problems such as toxicity; the lack of selectivity which leads to the destruction of beneficial insects or of natural predators of the plague it is sought to combat; and the resistance developed by the insects which causes an increase in the dose needed to maintain its efficacy.

The use of semiochemical substances has developed substantially and, in particular, techniques such as surveillance in order to anticipate the appearance of plagues and extinguish them, sexual confusion in order to prevent reproduction of the insects, and mass capture in order to decrease the population of them.

Semiochemicals display low toxicity and very high selectivity, since they act on a single species of insect. Also, they do not provoke any resistance among insects or contaminant effects for the environment.

As well as the use of semiochemicals in a process for combating insects, the entomopathogenic properties of certain types of microorganisms, such as fungi, can also be exploited. These properties are known, but their effectiveness in biological control of insect plagues depends largely on their method of application.

For the specific and directed application of entomopathogenic microorganisms, supports are needed for the spores that will keep them viable and without germinating for long periods of time in the field and, moreover, combining them with specific semiochemicals that will attract the particular species to be combated, towards the contaminant support.

For the use of semiochemicals to be effective, it is necessary to have physical supports complying with requisites such as:
- providing an adequate emission rate of the semiochemical,
- permitting prolonged duration of the emission,
- avoiding degradation of the semiochemical,
- not producing contaminant waste, and
- to be economical and to permit easy application of the semiochemical.

Of the emitter supports existing on the market, such as, for example, rubber septa, polyethylene pipes, porous plastic sheets, etc., none of them complies with the stated requisites.

Moreover, the methods so far used for the application of entomopathogenic microorganisms present problems of survival which diminish their efficacy.

Application WO-9101736 claims a gel of natural polymers to which attractant entomopathogens, feeding stimulants and protectors against UV are incorporated. It also claims several forms of gelling the polymers by means of metal cations and the insects ingest the entomopathogen with the gel.

The differences with the present process are that what is claimed is the adsorption of entomopathogenic fungi spores in adsorbent materials selected among silicates, silicoaluminates, phosphoaluminates and ion exchange resins, which further incorporate the insect-specific volatile attractant compounds (pheromones and other natural or synthetic attractants) in such a way that a slow, controlled and lasting emission of the same takes place (Patent UPV No. P 9701077) and they maintain a suitable degree of humidity for the survival of the spores.

WO-A-9208355 claims a process for drying microbial cultures, mixing them with a carrier like those used for formulating insecticides for dusting and drying, them with air. Its application is by means of coating seeds with microbial dust and is of no use for protecting aerial parts.

Application WO-9211356 claims some particular strains of entomopathogenic fungi. It also claims a formulation wherein the spores are incorporated into an emulsified bait containing cotton seed flour (proteins and carbohydrates), extracts of parts of cotton plants, oil and an emulgent, all these as a "feeding stimulant". This bait is sprayed in liquid form or it is added to a solid carrier in powder form, in the usual form of insecticide formulations and is applied as a wettable powder or in dusting.

WO-9324013 claims a storage chamber for entomopathogenic fungi for their conservation until they are used for controlling insects such as cockroaches, flies, ants and plagues of larvae, plagues on lawns and caterpillars. In these chambers, the temperature, humidity and oxygen are regulated. An emulgent can also be added for applying the fungus in aqueous suspension or in powder form. It cites two patents for cockroach traps.

WO-9510597 claims a formulation of entomopathogenic fungi wherein the conidia are suspended in a mineral oil. This formulation is used for being applied by spraying on crops. It can be made emulsionable for dispersion in water by the addition of an emulgent or adding an inert carrier to it for its application in the form of a suspendible powder as is usual in insecticide formulations.

EP-A-0406103 claims the culture of an entomopathogenic fungus on an inert solid support such as montmorillonite or atapulgite and the use of the resulting mass for spraying against plagues or for fermenting in the soil under sporulation conditions.

The use of adsorbent materials as controlled rate emitters of insect attractants - generally sexual pheromones - is described WO-A-9944420-A and WO-A-0000446.. Nevertheless, the process described in these patent applications does not include the use of an entomopathogenic agent.

As is revealed from the above paragraphs, both the actual existing physical supports and, in general, the methods for combating insects based on the use of entomopathogenic microorganisms still display serious deficiencies in several basic aspects, such as the period of duration of the composition or vehicle used and the demonstrated efficacy, for which reason there exists a demand for the development of new insect control systems.

### DESCRIPTION OF THE INVENTION

The present invention aims to overcome the drawbacks of the state of the art by means of a carrier vehicle for spores of at least one entomopathogenic microorganism, consisting of an adsorbent support selected among a granular form, a powder form and mixtures of them, capable of retaining the spores and maintaining their viability and a attractant semiochemical component, wherein:
the adsorbent support is a material selected among silicates, silicoaluminates, phosphoaluminates, ion exchange resins and combinations of them;
the spores are suspended in an oil component selected among mineral oils, vegetable oils, animal oils and mixtures of them, adsorbed onto the mineral support and located on the surface in a way that is accessible to the attracted insects;
and the semiochemical component is selected from among semiochemical substances specifically attractant of the species of insect it is wished to combat and is adsorbed on an adsorbent support.

The semiochemical component, selected among attractant semiochemical substances of insects susceptible of suffering the entomopathogenic effects of the spores, is also adsorbed on that support or on another analogous support.

The advantage of this invention is that it combines three different effects:
a) The fixing of the biological material on a support which adsorbs it on its surface in an adequate way for contaminating insects by contact and for maintaining its viability during a long period of time.
b) This support maintains by adsorption a degree of humidity that is adequate for preventing the biological material from drying out yet is insufficient for its germination, giving a prolonged life.
c) The same or another support, or a mixture of them, adsorbs the attractant producing a controlled and lasting emission thereof and ensuring the specificity.
d) An adhesive fixes the adsorbent support, in powder or granular form, on a solid surface (plates, spheres, etc.). This adhesive can be an organic polymer or an aqueous gel which contributes to maintain a constant and regulated supply of humidity to the adsorbent support located thereon.
e) The local form of application is more specific and ecological than general spraying.
f) The carrier support of spores and/or of attractants is adhered to a solid surface (plates, spheres, etc.) by means of a natural or synthetic polymeric adhesive, and the device is located in the field in the usual way for traps.

A first additional object of the present invention is a composition for combating insects which incorporates that vehicle comprising spores of at least one entomopathogenic microorganism, at least one adsorbent support selected from a granular form or in powder form and an attractant semiochemical component.

A second additional object of the present invention is a device for combating insects, characterised in that it comprises a receptacle comprising, in a way that is accessible for insects, a carrier vehicle of spores of at least one entomopathogenic microorganism, at least one adsorbent support in granular or powder form, and an attractant semiochemical component.

A third additional object of the present invention is a method for combating insects by means of infection of them with spores of at least one entomopathogenic microorganism, characterised in that an efficacious quantity of the vehicle or of the composition obtained, according to the invention, is made available to the insects.

The entomopathogenic microorganism can be any fungus or bacterium capable of contaminating the insects. In a preferred manner, said microorganism is a fungus, for example *Metarhizium anisopliae, Paecilomyces fumosoroseus, Beauveria bassiana,* etc. The spores of the entomopathogenic microorganism are present in a quantity between 1x10³ and 1x10¹² spores per gram of adsorbent support.

The support is a natural or synthetic adsorbent material selected from among silicates, silicoaluminates, phosphoaluminates, ion exchange resins, or any combination of them. In a preferred manner, said support is a zeolite and more preferably still it is a sepiolite.

The size of the structural channels of the adsorbent support must be adequate for housing the spores yet preventing them from penetrating to the interior of the structure of the support when exposed and accessible to insects. This size of particle lies between 230-450 nm, preferably between 240 nm and 420 nm (figure 1). The quantity of adsorbent support used is between 50 and 60 mg per cm³.

The device of the present invention can furthermore include an intermediate base for fixing the adsorbent support on a flat or curved solid surface. This intermediate base can be any organic adherent polymer, such as for example an elastomeric adhesive, or an emulsion of them, or an aqueous adherent gel obtained with one or more natural or synthetic gelling agents, such as for example agar, alginates or other polymers of algae and fungi, carboxymethylcellulose, crystalline cellulose, quitosanes and derivatives, methylcellulose and methylbutylcellulose.

When this adherent intermediate base is an aqueous gel, a wetting agent can also be added to it, such as sorbitol, glycerol, manitol, xylitol and combinations thereof. Desiccation is thereby avoided and this intermediate base also helps to maintain the humidity of the adsorbent support in powder or granular form for the spores.

In a preferred embodiment, methylbutylcellulose is used. In another preferred embodiment, a mixture is used of carboxymethylcellulose (CMC) and methylcellulose (MC) in a proportion of CMC and MC of between 5 and 40 % by weight. The moistening agent is selected from among one or more polyalcohols, in a preferred way it is selected from among sorbitol, glycerol, manitol, xylitol and combinations thereof. In a still more preferred way, sorbitol or glycerol is used.

The quantity of said moistening agent in the device is between 20 % and 96 % by dry weight. It is preferably in a proportion of from 25 % to 85 % by dry weight of the device.

The attractant semiochemical component is specific for the species being dealt with and can be a pheromone or other natural or synthetic attractant that produces an adequate response. Specific examples of semiochemicals are trimedlure and 1-4-tetramethylenediamine, specific attractants of *Ceratitis capitata,* or methyl-eugenol, an attractant of *Bactrocera dorsalis.* The semiochemical component is present in the adsorbent support in a proportion between 0.005 - 1.0 gram per gram of adsorbent support, preferably in a proportion between 0.02-0.7 grams per gram of said adsorbent support.

The adsorbent support of the present invention can furthermore comprise an oil component selected among mineral oils, vegetable oils, animal oils and mixtures thereof, which contributes to fixing the attractant semiochemical component and protecting the spores. The function of the oil component is to help in the retention of the semiochemical and its slow and controlled emission and to maintain the spores in an oily medium in order to increase their protection and extend their life-time. Said oil component is present in the vehicle by an amount between 20 % and 75 %.

The device of the present invention can adopt various forms according to the arrangement of its components, thereby ensuring the maximum duration of the attraction and contamination of the insect. So, the surface coated with the support can be flat (plates of different dimensions, folded or unfolded) or curved (spheres imitating fruits, cones, cylinders and other shapes).

In a first form, an adsorbent support containing the spores and the semiochemical component with or without oil is adhered to a solid surface by means of organic adhesives or aqueous gels.

In a second form, the spores and the semiochemical component are adsorbed onto different adsorbent supports. The mixture of the two supports is adhered to a solid surface by means of organic adhesives or aqueous gels.

In a third form, the adsorbent support containing the semiochemical component is incorporated into the adhesive base layer and the adsorbent support containing the spores is spread on the surface.

In a fourth form, the adsorbent support containing the semiochemical component is in the form of a pill, located in the centre of the adhesive base layer and surrounded by the adsorbent support containing the spores.

The vehicle of the present invention can include a UV ray photoprotector in its composition.

For its transportation and use, the vehicle of the present invention is located on an object, for example, plates or spheres, the surface of which contains an adherent component and the adsorbent. These plates are located in the field underneath the traps, which protect them from the sun and rain.

An additional object of the present invention is a composition that includes a carrier vehicle for spores of at least one entomopathogenic microorganism adsorbed on a support, as specified earlier, the application of which can be done in a suspension of the vehicle in a fluid, such as water for example, or by dusting, in an manner analogous to insecticide formulations.

A second additional object of the present invention is a device for combating insects, comprising a receptacle which, in a manner accessible for the insects, comprises a vehicle or a composition which incorporates spores of at least one entomopathogenic microorganism adsorbed on an adsorbent support, as has been specified earlier.

By means of the present invention, a long period of activity of the spores is achieved since the device maintains the necessary humidity in the adsorbent material for their survival and permits the degree of humidity to be maintained for prolonged periods, of the order of 2 to 5 months of exposure in the field.

Another advantage over the prior art is the selective effect that is achieved, thanks to the use of an attractant semiochemical, specific to the species to be dealt with.

Another advantage of the present invention consists of the use of particles of adsorbent material as support for the spores, which grants efficacy to the method of combating insects since it ensures its contact with the insect and contamination of it, as well as acting as an attractant vehicle and so that the humidity can reach the spores.

### EXAMPLES

The following examples serve to illustrate the different aspects of the invention.

### EXAMPLE 1

An adherent layer of 2 mm of polyisobutylene is deposited on a plastic plate, and on this another layer of MCM-41 zeolite carrier of adsorbed spores of *Metarhizium anisopliae* suspended in mineral oil is deposited. The zeolitic support is also impregnated with specific attractants of *Ceratitis capitata,* for example, with trimedlure or 2-4-tetramethylenediamine in a proportion of 0.5 and 0.005 g per gram of zeolite.

Table 1 shows the result obtained with the spore carrier vehicle, exposed in the field for three months. In particular, the effect of ageing is shown on the physical and biological properties of the attractant-contaminant plates of *Ceratitis capitata,* along with the results of its action on the insects.

**TABLE 1**

| Time (days) | Power of Attraction (%)^{a)} (mean ± SD) | Mortality (%) ^{b)} (mean ± SD) | Loss of humidity (%) |
|---|---|---|---|
| 0 | 2.10 ± 1.5 | 15.0 ± 0.9 | 0 |
| 15 | 8.2 ± 0.5 | 45.8 ± 1.6 | 35.4 ± 1.1 |
| 30 | 30.2 ± 2.6 | 68.4 ± 2.7 | 45.1 ± 2.7 |
| 45 | 37.4 ± 2.1 | 70.3 ± 2.7 | 59.7 ± 3.6 |
| 60 | 46.7 ± 1.7 | 76.4 ± 3.4 | 65.4 ± 2.6 |
| 75 | 40.9 ± 0.9 | 70.8 ± 3.2 | 69.3 ± 1.8 |
| 90 | 27.5 ± 2.5 | 67.6 ± 1.8 | 72.3 ± 3.1 |

| | | | |
|---|---|---|---|
| ^{a)} Mean count of males alighting on the plate, every 5 minutes, for 3 hours. ^{b)} Number of dead flies as a result of mycosis following a 24 hour exposure period to the plate. | | | |

### EXAMPLE 2

A plate is prepared with a gelled adherent base of methybutylcellulose in a proportion that can vary from 10 to 45 %. Glycerol is added as a moistening agent in a proportion of 20 to 75 % by dry weight. Deposited on the gel is a layer of sepiolite of particle size between 240-420 nm, which is impregnated with spores of *Paecilomyces fumosoroseus*, suspended in mineral oil. The attractant semiochemical used is methyl-eugenol, an attractant of *Bactrocera dorsalis,* which is adsorbed on another portion of sepiolite in a proportion between of 0.8 gram of sepiolite and is compacted to form a pill, which is partially submerged in the centre of the plate carrying the gel component.

The plates are located in the field underneath the traps, which protect them from the sun and rain.

Table 2 shows the effect of ageing in the physical and biological properties of the attractant-contaminant plates of *Bactrocera dorsalis,* along with the results of its action on the insects.

**TABLE 2**

| Time (days) | Power of Attraction (%) ^{a)} (mean ± SD) | Mortality (%) ^{b)} (mean ± SD) | Loss of humidity (%) |
|---|---|---|---|
| 0 | 6.10 ± 5 | 30.0 ± 0.7 | 0 |
| 15 | 11.2 ± 1.3 | 40.3 ± 1.1 | 30.1 ± 1.6 |
| 30 | 35.4 ± 1.9 | 78.0 ± 2.8 | 45.1 ± 2.7 |
| 45 | 49.8 ± 3.4 | 84.7 ± 3.4 | 43.4 ± 2.4 |
| 60 | 55.9 ± 2.4 | 90.3 ± 2.1 | 46.3 ± 2.6 |
| 75 | 50.2 ± 1.3 | 85.7 ± 1.4 | 50.1 ± 2.2 |
| 90 | 38.3 ± 2.2 | 70.4 ± 0.9 | 62.3 ± 1.3 |

| | | | |
|---|---|---|---|
| ^{a)} Mean count of males alighting on the plate, every 5 minutes, for 3 hours. ^{b)} Number of dead flies as a result of mycosis following a 24 hour exposure period to the plate. | | | |

## Claims

1. A carrier vehicle of spores of at least one entomopathogenic microorganism on an adsorbent support selected among a granular form, a powder form and mixtures thereof, and of an attractant semiochemical component, **characterised in that**:
the natural or synthetic adsorbent support is a material selected from among silicates, silicoaluminates, phosphoaluminates, ion exchange resins and combinations of them;
the spores suspended in an oil component selected among mineral oils, vegetable oils, animal oils and mixtures of them, and are adsorbed onto the mineral support and located on the surface in a way that is accessible to the attracted insects;
and the semiochemical component is selected from among semiochemical substances specifically attractant of the species of insect it is wished to combat and is adsorbed on an adsorbent support.

2. A vehicle according to claim 1, **characterised in that** it furthermore comprises an adherent intermediate base for retaining the adsorbent powder and preventing its dispersion, said base being selected between a viscous polymer or an aqueous gel with a moistening agent, and said adherent intermediate base being applied on plates, spheres or other solid shapes for being located in the field.

3. A vehicle according to claim 2, **characterised in that** the attractant semiochemical component is adsorbed on the adsorbent support and said support, coated with the spores, is spread on the intermediate adherent.

4. A vehicle according to claim 2, **characterised in that**:
the semiochemical component is adsorbed on a natural or synthetic support selected among a granular form, a powder form and mixtures thereof, and selected from among silicates, silicoaluminates, phosphoaluminates, ion exchange resins and combinations of them, and this support can be the same as or different from the spore carrier.

5. A vehicle according to claim 4, **characterised in that**:
the semiochemical component is adsorbed on the adsorbent support, the same as or different from the spore carrier.
the adsorbent support together with the semiochemical is compacted in pills, which are surrounded by the carrier support for spores, being the two adsorbent supports the same or different.

6. A vehicle according to claim 1, 4, or 5, **characterised in that**: the spores are suspended in an oil component selected among mineral oils, vegetable oils, animal oils and mixtures of them.

7. A vehicle according to claim 2, **characterised in that**: the intermediate adhesive layer is selected among organic polymeric adhesives or is an aqueous gel of natural or synthetic polymers.

8. A vehicle according to claim 7, **characterised in that**: the adherent layer is formed from organic adhesives or from gels, the gelling substance of which is selected among natural or synthetic hydrophilic polymers such as carboxymethylcellulose, crystalline cellulose, carboxymethylchitosane, methylcellulose, methylbutylcellulose, quitosanes, polymers of algae and plants and combinations thereof.

9. A vehicle according to claim 2, **characterised in that** the moistening agent consists of one or more polyalcohols.

10. A vehicle according to claim 9, **characterised in that** the moistening agent is selected among sorbitol, glycerol, manitol, xylitol and combinations thereof.

11. A vehicle according to claim 2, **characterised in that** the moistening agent is present in a quantity between 20 % and 96 % of the dry weight of the gelling agent.

12. A vehicle according to any of the above claims, **characterised in that** the semiochemical component comprises at least one pheromone or a synthetic or natural attractant, specific for the species is it wished to combat.

13. A vehicle according to any of claims 1 to 5, **characterised in that** the semiochemical component is present in the adsorbent support in a quantity between 0.005 and 1 g per gram.

14. A vehicle according to claim 4 or 5, **characterised in that** the semiochemical component is present in the second adsorbent support in a quantity between 0.0005 and 1 g per gram of said second adsorbent support.

15. A vehicle according to claim 1, **characterised in that** the entomopathogenic microorganism is a fungus or bacterium.

16. A vehicle according to claim 1, **characterised in that** the spores of the entomopathogenic microorganism are present in a quantity between 1x10³ - 1x10¹² spores per gram of adsorbent support.

17. A vehicle according to claim 1, **characterised in that** the oil component is present in a quantity between 20-75 % per gram of adsorbent support.

18. A composition for combating insects which contains a vehicle as defined according to any of claims 1 to 17.

19. A device for combating insects, **characterised in that** it comprises a receptacle containing, in a form accessible for the insects, a vehicle defined according to any of claims 1 to 17.

20. A device for combating insects, **characterised in that** it comprises a receptacle containing, in a form accessible for the insects, a composition defined in claim 18.

21. A method for combating insects by means of infection of the insects with spores of microorganisms, **characterised in that** the insects are exposed to an efficacious quantity of a vehicle according to any of claims 1 to 17 or composition according to claim 18.

## Patentansprüche

1. Träger-Vehiculum für Sporen mindestens eines entomopathogenen Mikroorganismus auf einem adsorptionsfähigen Träger, ausgewählt aus der Gruppe körnige Form, Pulverform und Mischungen davon, und für eine semiochemische Lockmittel-Komponente, **dadurch gekennzeichnet, dass**:
der natürliche oder synthetische adsorptionsfähige Träger ein Material ist, ausgewählt aus der Gruppe der Silicate, Silicoaluminate, Phosphoaluminate, lonenaustauscherharze und Kombinationen davon;
die Sporen in einer Ölkomponente, ausgewählt aus der Gruppe der Mineralöle, pflanzlichen Öle, tierischen Öle und Mischungen davon, suspendiert und an dem Mineral-Träger adsorbiert und auf der Oberfläche desselben so angeordnet sind, dass sie für die angelockten Insekten zugänglich sind; und
die semiochemische Komponente ausgewählt ist aus der Gruppe der semiochemischen Substanzen, die spezifisch die Insekten-Species anlocken, die bekämpft werden soll, und die an einem adsorptionsfahigen Träger adsorbiert ist.

2. Vehiculum nach Anspruch 1, **dadurch gekennzeichnet, dass** es außerdem einen haftfähigen Zwischenträger zum Festhalten des adsorptionsfähigen Pulvers und zur Verhinderung seiner Dispersion aufweist, wobei der Zwischenträger ausgewählt ist aus der Gruppe viskoses Polymer oder wässriges Gel mit einem Anfeuchtungernittel, und der haftfähige Zwischenträger für die Anordnung im Freien auf Platten, Kugeln oder andere feste Formkörper aufgebracht ist.

3. Vehiculum nach Anspruch 2, **dadurch gekennzeichnet, dass** die semiochemische Lockmittel-Komponente an dem adsorptionsfähigen Träger adsorbiert ist und der Träger, der mit den Sporen bedeckt ist, auf dem haftfähigen Zwischenträger ausgebreitet ist.

4. Vehiculum nach Anspruch 2, **dadurch gekennzeichnet, dass** die semiochemische Komponente an einem natürlichen oder synthetischen Träger, ausgewählt aus der Gruppe körnige Form, Pulverform und Mischungen davon, adsorbiert und ausgewählt ist aus der Gruppe der Silicate, Silicoaluminate, Phosphoaluminate, ionenaustauscherharze und Kombinationen davon, und dass dieser Träger der gleiche sein kann wie der Sporenträger oder davon verschieden sein kann.

5. Vehiculum nach Anspruch 4, **dadurch gekennzeichnet, dass**
die semiochemische Komponente an den adsorptionefähigen Träger adsorbiert ist, weicher der gleiche sein kann wie der Sporenträger oder davon verschieden sein kann, und
der adsorptionsfähige Träger zusammen mit der semiochemischen Komponente zu Pillen gepresst ist, die von dem Sporenträger umgeben sind, wobei die beiden adsorptionsfähigen Träger gleich oder voneinander verschieden sind.

6. Vehiculum nach Anspruch 1, 4 oder 5, **dadurch gekennzeichnet, dass** die Sporen in einer Öl-Komponente, ausgewählt aus der Gruppe der Mineralöle, pflanzlichen Öle, tierischen Öle und Mischungen davon, suspendiert sind.

7. Vehiculum nach Anspruch 2, **dadurch gekennzeichnet, dass** der haftfähige Zwischenträger ausgewählt ist aus der Gruppe der organischen polymeren Klebstoffe oder ein wässriges Gel aus natürlichen oder synthetischen Polymeren ist.

8. Vehiculum nach Anspruch 7, **dadurch gekennzeichnet, dass** die haftfähige Schicht aus organischen Klebstoffen oder aus Gelen, deren gelbildende Substanz ausgewählt ist aus den natürlichen oder synthetischen hydrophilen Polymeren, wie z.B. Carboxymethylcellulose, kristalliner Cellulose, Carboxyrnathylchitosan, Methylcellulose, Methylbutylcellulose, Chitosanen, Polymeren von Algen und Pflanzen und Kombinationen davon, hergestellt ist.

9. Vehiculum nach Anspruch 2, **dadurch gekennzeichnet, dass** das Anfeuchtungsmittel aus einem oder mehreren Polyalkoholen besteht.

10. Vehiculum nach Anspruch 9, **dadurch gekennzeichnet, dass** das Anfeuchtungsmittel ausgewählt ist aus der Gruppe Sorbit, Glycerin, Mannit, Xylit und Kombinationen davon.

11. Vehiculum nach Anspruch 2, **dadurch gekennzeichnet, dass** das Anfeuchtungsmittel in einer Menge zwischen 20 und 96 Gew.-%, bezogen auf das Trockengewicht des Gelbildungsmittels, vorliegt.

12. Vehiculum nach einem der oben genannten Ansprüche, **dadurch gekennzeichnet, dass** die semlochemische Komponente mindestens ein Pheromon oder ein synthetisches oder natürliches Lockmittel umfasst, das spezifisch ist für die Species, die damit bekämpft werden soll.

13. Vehiculum nach einem der Ansprüche 1 bis 5, **dadurch gekennzeichnet, dass** die semiochemische Komponente in dem adsorptionsfähigen Träger in einer Menge zwischen 0,005 und 1 g pro Gramm vorliegt.

14. Vehiculum nach Anspruch 4 oder 5, **dadurch gekennzeichnet, dass** die semiochemische Komponente in dem zweiten adsorptionsfähigen Träger in einer Menge zwischen 0.0005 und 1 g pro Gramm des zweiten adsorptionsfähigen Trägers vorliegt.

15. Vehiculum nach Anspruch 1, **dadurch gekennzeichnet, dass** der entomopathogene Mikroorganismus ein Fungus oder ein Bakterium ist.

16. Vehiculum nach Anspruch 1, **dadurch gekennzeichnet, dass** die Sporen des entomopathogenen Mikroorganismus in einer Menge zwischen 1 x 10³ und 1 x 10¹² Sporen pro Gramm adsorptionsfähigem Träger vorliegen.

17. Vehiculum nach Anspruch 1, **dadurch gekennzeichnet, dass** die Öikomponente in einer Menge zwischen 20 und 75 % pro Gramm adsorptionsfähigem Träger vorliegt.

18. Zusammensetzung zum Bekämpfen von Insekten, die ein Vehiculum nach einem der Ansprüche 1 bis 17 enthält.

19. Vorrichtung zum Bekämpfen von Insekten, **dadurch gekennzeichnet, dass** sie einen Behälter umfasst, der in einer für die Insekten zugänglichen Form ein Vehiculum nach einem der Ansprüche 1 bis 17 enthält.

20. Vorrichtung zum Bekämpfen von Insekten, **dadurch gekennzeichnet, dass** sie einen Behälter umfasst, der in einer für die Insekten zugänglichen Form eine Zusammensetzung nach Anspruch 18 enthält.

21. Verfahren zum Bekämpfen von Insekten durch Infektion der Insekten mit Mikroorganismen-Sporen, **dadurch gekennzeichnet, dass** die Insekten einer wirksamen Menge eines Vehiculums nach einem der Ansprüche 1 bis 17 oder einer Zusammensetzung nach Anspruch 18 ausgesetzt werden.

## Revendications

1. Véhicule porteur de spores d'au moins un micro-organisme entomopathogène sur un support adsorbant choisi parmi une forme granulaire, une forme pulvérulente et leurs mélanges, et d'un composant sémiochimique attirant, **caractérisé en ce que** :
le support adsorbant naturel ou synthétique est une substance choisie parmi les silicates, les silicoaluminates, les phosphoaluminates, les résines échangeuses d'ions et leurs combinaisons ;
les spores en suspension dans un composant huileux choisi parmi les huiles minérales, les huiles végétales, les huiles animales et leurs mélanges, et sont adsorbées sur le support minéral et situées sur la surface d'une manière qui est accessible aux Insectes attirés ;
et le composant sémiochimique est choisi parmi les substances sémiochimiques attirant spécifiquement l'espèce ou les espèces d'insectes que l'on souhaite combattre et est adsorbé sur un support adsorbant.

2. Véhicule selon la revendication 1, **caractérisé en ce qu'**il comprend en outre une base intermédiaire adhérente pour retenir la poudre d'adsorbant et empêcher sa dispersion, ladite base étant choisie entre un polymère visqueux ou un gel aqueux avec un agent humidifiant, et ladite base intermédiaire adhérente étant appliquée sur des plaques, des sphères ou d'autres formes solides destinées à être situées dans le champ.

3. Véhicule selon la revendication 2, **caractérisé en ce que** le composant sémiochimique attirant est adsorbé sur le support adsorbant et ledit support, recouvert des spores, est dispersé sur l'intermédiaire adhérent.

4. Véhicule selon la revendication 2, **caractérisé en ce que** :
le composant sémiochimique est adsorbé sur un support naturel ou synthétique choisi parmi une forme granulaire, une forme pulvérulente et leurs mélanges, et choisi parmi les silicates, les silicoaluminates, les phosphoaluminates, les résines échangeuses d'ions et leurs combinaisons, et ce support peut être identique ou différent du porteur de spores.

5. véhicule selon la revendication 4, **caractérisé en ce que** :
le composant sémiochimique est adsorbé sur le support adsorbant, identique ou différent du porteur de spores,
le support adsorbant en même temps que le composant sémiochimique est compacté en pilules, qui sont entourées par le support porteur pour les spores, les deux supports adsorbants étant Identiques ou différents.

6. Véhicule selon la revendication 1, 4 ou 5, **caractérisé en ce que** : les spores sont en suspension dans un composant huileux choisi parmi les huiles minérales, les huiles végétales, les huiles animales et leurs mélanges.

7. Véhicule selon la revendication 2, **caractérisé en ce que** : la couche adhésive intermédiaire est choisie parmi les adhésifs polymères organiques ou est un gel aqueux de polymères naturels ou synthétiques.

8. Véhicule selon la revendication 7, **caractérisé en ce que** : la couche adhérente est formée à partir d'adhésifs organiques ou de gels, dont la substance gélifiante est choisie parmi les polymères hydrophiles naturels ou synthétiques comme la carboxyméthylcellulose, la cellulose cristalline, le carboxyméthylchitosane, la méthylcellulose, la méthylbutylcellulose, les quitosanes, les polymères d'algues et de plantes et leurs combinaisons.

9. Véhicule selon la revendication 2, **caractérisé en ce que** l'agent humidifiant consiste en un ou plusieurs polyalcools.

10. Véhicule selon la revendication 9, **caractérisé en ce que** l'agent humidifiant est choisi parmi le sorbitol, le glycérol, le mannitol, le xylitol et leurs combinaisons.

11. Véhicule selon la revendication 2, **caractérisé en ce que** l'agent humidifiant est présent en une quantité entre 20 % et 96 % de la masse sèche de l'agent gélifiant.

12. Véhicule selon l'une quelconque des revendications précédentes, **caractérisé en ce que** le composant sémiochimique comprend au moins une phéromone ou un agent attirant synthétique ou naturel, spécifique de l'espèce ou des espèces que l'on souhaite combattre.

13. Véhicule selon l'une quelconque des revendications 1 à 5, **caractérisé en ce que** le composant sémiochimique est présent dans le support adsorbant en une quantité entre 0,005 et 1 g/g.

14. Véhicule selon la revendication 4 ou 5, **caractérisé en ce que** le composant sémiochimique est présent dans le second support adsorbant en une quantité entre 0,0005 et 1 g/g dudit second support adsorbant.

15. Véhicule selon la revendication 1, **caractérisé en ce que** le micro-organisme entomopathogène est un champignon ou une bactérie.

16. Véhicule selon la revendication 1, **caractérisé en ce que** les spores du micro-organisme entomopathogène sont présentes en une quantité de 1x10³-1x10¹² spores par gramme de support adsorbant.

17. Véhicule selon la revendication 1, **caractérisé en ce que** le composant huileux est présent en une quantité de 20-75 % par gramme de support adsorbant.

18. Composition pour combattre les insectes qui contient un véhicule tel que défini selon l'une quelconque des revendications 1 à 17.

19. Dispositif pour combattre les insectes, **caractérisé en ce qu'**il comprend un réceptacle contenant, sous une forme accessible pour les insectes, un véhicule défini selon l'une quelconque des revendications 1 à 17.

20. Dispositif pour combattre les insectes, **caractérisé en ce qu'**il comprend un réceptacle contenant, sous une forme accessible pour les insectes, une composition définie dans la revendication 18.

21. Procédé pour combattre les insectes par infection des insectes avec des spores de micro-organismes, **caractérisé en ce que** les Insectes sont exposés à une quantité efficace d'un véhicule selon l'une quelconque des revendications 1 à 17 ou d'une combinaison selon la revendication 18.
